Europäisches Patentamt

European Patent Office

Office européen des brevets

(11) Veröffentlichungsnummer : **0 190 180**
**B1**

(12) **EUROPÄISCHE PATENTSCHRIFT**

(45) Veröffentlichungstag der Patentschrift :
**15.03.89**

(21) Anmeldenummer : **85903290.6**

(22) Anmeldetag : **13.07.85**

(86) Internationale Anmeldenummer :
**PCT/EP 85/00345**

(87) Internationale Veröffentlichungsnummer :
**WO/8601330 (27.02.86 Gazette 86/05)**

(51) Int. Cl.⁴ : **G 11 B 33/04**

(54) VORRICHTUNG ZUM AUFBEWAHREN VON FLACHEN AUFZEICHNUNGSTRÄGERN.

**Teilanmeldung 88100751 eingereicht am 20.01.88.**

(30) Priorität : **03.08.84 DE 8423125 U**

(43) Veröffentlichungstag der Anmeldung :
**13.08.86 Patentblatt 86/33**

(45) Bekanntmachung des Hinweises auf die Patenterteilung : **15.03.89 Patentblatt 89/11**

(84) Benannte Vertragsstaaten :
**AT BE CH DE FR GB IT LI NL SE**

(56) Entgegenhaltungen :
**DE--A-- 2 343 487**
**DE--A-- 2 542 622**
**DE--A-- 3 216 888**
**DE--A-- 3 301 203**

(73) Patentinhaber : **idn inventions and development of novelties ag**
**Hartbertstrasse 9**
**CH-7002 Chur (CH)**

(72) Erfinder : **ACKERET, Peter**
**Allmendstrasse 18**
**CH-8700 Küsnacht (CH)**

(74) Vertreter : **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf 1 (DE)**

## Beschreibung

Die Erfindung betrifft eine Vorrichtung zum Aufbewahren von flachen Aufzeichnungsträgern, insbesondere von Kompaktkassetten oder Compactdisks, mit den im Oberbegriff des Patentanspruchs 1 genannten Merkmalen. Eine solche Vorrichtung ist in der DE-A-23 43 487 beschrieben und dargestellt.

Das Gehäuse einerseits, der Schieber andererseits sind bei der bekannten Vorrichtung jeweils Spritzgußteile aus thermoplastischem Kunststoff. Bei der Fertigung des Gehäuses erfolgt dabei das Entformen in Richtung der späteren Schieberbewegung, und da ein Entformen nur möglich ist, wenn bei der Gestaltung der Form der sogenannte « Anzug » berücksichtigt wird, sind die Führungsflächen der Schienen im Gehäuse nicht genau parallel. Im Ergebnis ist die seitliche Abstützung des Schiebers in seiner ausgeschobenen Position relativ lose. Wird eine solche Vorrichtung im Kraftfahrzeug benutzt, kann dies zu störendem Klappern führen.

Aufgabe der Erfindung ist es, die gattungsgleiche Vorrichtung so zu gestalten, daß dieser Nachteil behoben wird.

Diese Aufgabe wird gemäß der Erfindung dadurch gelöst, daß für jeden Schieber eine getrennt gefertigte, die Schieberführung und Mittel zum Halten eines Federendes in seiner Funktionslage aufweisende Platte zusammen mit der Federanordnung als vormontierte Baugruppe in das Gehäuse eingefügt ist.

Das Gehäuse ist demnach aus mehreren (mindestens zwei) Teilen zusammengefügt, die jeweils für sich gespritzt werden und deshalb so entformt werden können, daß zumindest die genaue Geradführung des Schiebers gewährleistet ist. Diese Gestaltung bringt noch weitere Vorteile mit sich: So kann man für die Platte(n) ein anderes Material wählen als für das (Rest-)gehäuse, nämlich eines das zwar teurer ist, dafür aber günstigere Reibungswerte bezüglich des Schiebermaterials aufweist ; dies ist gerechtfertigt, wenn die Größe der Platte relativ zum Restgehäuse klein gewählt wird. Ein weiterer möglicher Vorteil besteht darin, daß bei der Montage Baugruppen aus jeweils einer Platte einerseits, der Federanordnung und-/oder dem Schieber andererseits gebildet werden, die dann komplett in das (Rest-) gehäuse eingesetzt werden. Dies ist besonders dann bevorzugt, wenn in einem einzigen Gehäuse eine Mehrzahl solcher Baugruppen unterzubringen ist.

Aus DE-A-3 216 888 ist ein Behälter für eine Mehrzahl von Kassetten bekannt, bestehend aus einem Gehäuse und mehreren Schiebern für die Aufnahme je einer Kassette. In einer Ausführungsform sind für die Schieberführung Zwischenböden vorgesehen, die getrennt vom Gehäuse gefertigt und bei der Montage in das Gehäuse eingeschnappt werden.

Ausführungsbeispiele des Gegenstandes der Erfindung werden nachstehend unter Bezugnahme auf die beigefügten Zeichnungen im einzelnen erläutert.

Fig. 1 zeigt perspektivisch eine in ein Restgehäuse einfügbare Platte,

Fig. 2 ist ein Vertikalschnitt durch einen Teil der fertigmontierten Vorrichtung,

Fig. 3 zeigt einen Horizontalschnitt durch die fertigmontierte Vorrichtung von oben gesehen,

Fig. 4 ist eine zu Fig. 3 analoge Darstellung einer zweiten Ausführungsform,

Fig. 5 ist ein Teilschnitt nach Linie 5-5 der Fig. 4,

Fig. 6 ist ein Teilschnitt nach Linie 6-6 der Fig. 4, analog zu Fig. 2,

Fig. 7 ist ein Horizontalschnitt analog zu Fig. 3 einer dritten Ausführungsform, wobei jedoch der Schieber in der zweiten Position dargestellt ist,

Fig. 8 ist ein Schnitt nach Linie 8-8 der Fig. 7,

Fig. 9 ist ein Schnitt nach Linie 9-9 der Fig. 8,

Fig. 10 ist ein Teilschnitt nach Linie 10-10 der Fig. 7, und

Fig. 11 zeigt in Explosionsdarstellung eine vierte Ausführungsform.

Die ersten beiden Ausführungsbeispiele beziehen sich auf Vorrichtungen zum Aufbewahren von Kompaktkassetten, während die dritte Ausführungsform Teil eines Behälters für Compactdisks ist, und die vierte wieder für Kompaktkassetten bestimmt ist.

Das erste Ausführungsbeispiel geht davon aus, daß mehrere Schieber in einem gemeinsamen Gehäuse vorgesehen werden, wobei für jeden Schieber eine Platte in das Gehäuse eingefügt wird.

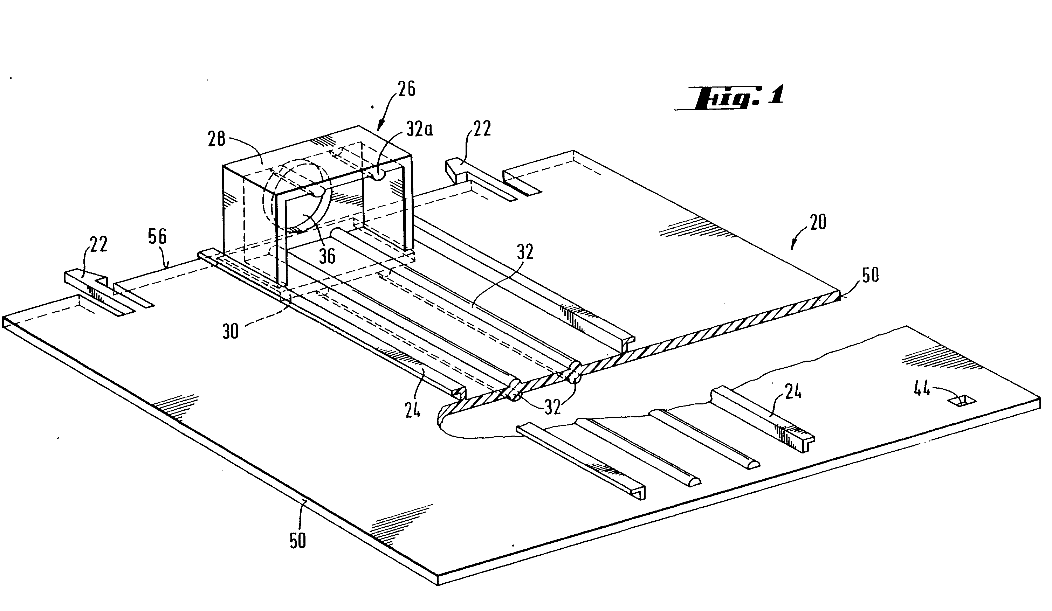

Man erkennt in Fig. 1 eine solche Platte 20 mit angeformten Verankerungshaken 22, Schieberführungsschienen 24 und Federkasten 26. Kongruent mit der Deckwand 28 des Kastens 26 befindet sich eine Eintiefung 30 auf der dem Kasten abgewandten Unterseite der Platte, und die Tiefe der Eintiefung entspricht der Dicke der Deckwand 28. In dem in der Zeichnung weggebrochen dargestellten Bereich ist das Profil der Platte 20 erkennbar ; zusätzlich zu den Schienen 24 sind an sie noch oben und unten Stege 32 angeformt, die eine Schraubendruckfeder außen gegen Abknicken abstützen. Die unteren Stege reichen nur bis zu der inneren Kante der Eintiefung 30 ; dafür weist die Deckwand 28 kongruente Stege 32a auf. Beim Einfügen mehrerer vormontierter Baugruppen in ein gemeinsames Gehäuse bilden die letztgenannten Stege 32a die Fortsetzung der unteren Stege 32 der jeweils unmittelbar darüber angeordneten Platte, usw. Für die im Gehäuse unterste Platte ist im Gehäuse Freiraum für die unteren Stege 32 vorgesehen ; für die im Gehäuse oberste Platte ist dann noch eine Hilfsplatte vorzusehen, die oben glatt ist und nur auf ihrer Unterseite untere Stege 32 und die Eintiefung 30 aufweist ; diese Hilfsplatte kann von der Gehäusedeckwand gebildet sein.

Die Rückwand 34 des Federkastens weist einen Durchbruch 36 auf. Für die Vormontage steckt man die Platte 20 mit diesem Loch auf einen Dorn einer Montagehilfsvorrichtung, fädelt eine Schraubenfeder 38 auf den Dorn, die sich dann innen rings um den Durchbruch 36 an der Rückwand 34 abstützt, und schiebt einen Schieber 40 auf die Führungsschienen in Richtung Federkasten, wobei der Dorn entsprechend ausweicht. In der vorgesehenen inneren Endstellung befindet sich die Feder 38 komprimiert im Federkasten, und der Schieber verriegelt sich mit seiner Taste 42 an der Platte in einem Durchbruch 44 (der Aufbau der Verriegelung ist der Übersichtlichkeit wegen nicht im Detail gezeichnet ; hier können die Ausführungsformen aus dem eingangs genannten Stand der Technik übernommen werden. - Dasselbe gilt übrigens auch für die Anordnung der Anschläge, die den Ausschubweg des Schiebers begrenzen).

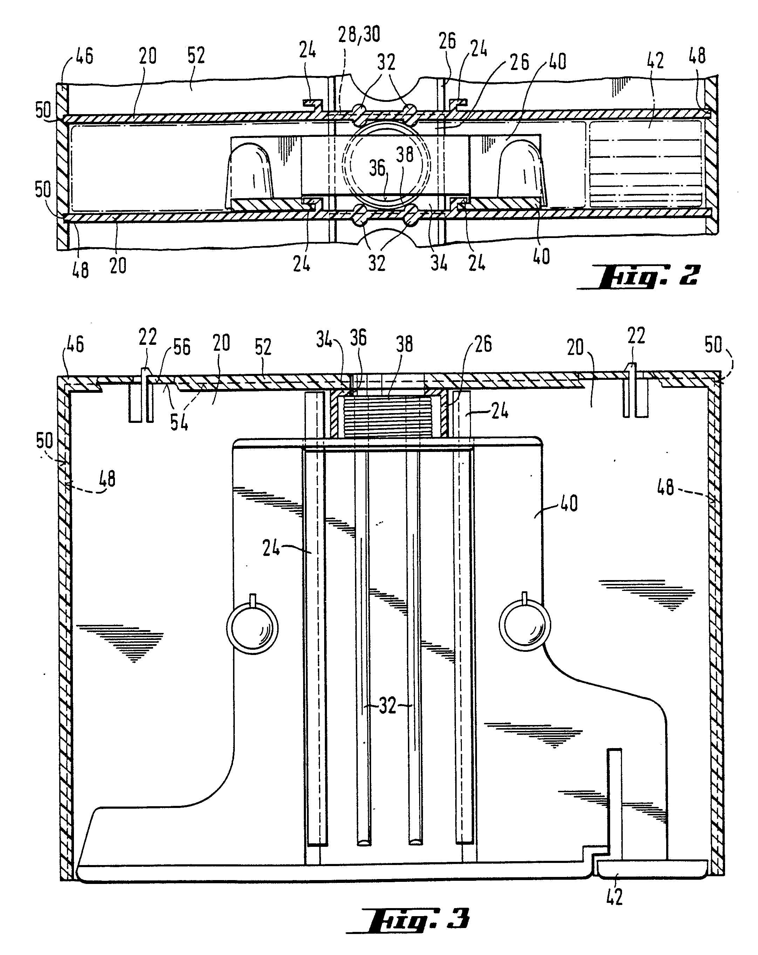

Die so vormontierte Baugruppe kann zwischengelagert werden, bis Restgehäuse 46 mit ihr zu bestücken sind. Diese Restgehäuse weisen seitliche Nuten 48 auf, längs denen die Seitenkanten 50 der Platte 20 einschiebbar sind. Ebenso sind auf der Innenseite der Restgehäuserückwand 52 Nuten 54 vorgesehen, in die schließlich die Endkanten 56 der Platten eingreifen. Zugleich verhaken sich die Verankerungshaken 22 der Platte hinter die Außenseite der Gehäuserückwand. - Es ist anzumerken, daß in Fig. 2 nur eine Baugruppe vollständig dargestellt ist ; von der darüber befindlichen ist nur die Platte ohne Feder und ohne Schieber gezeichnet.

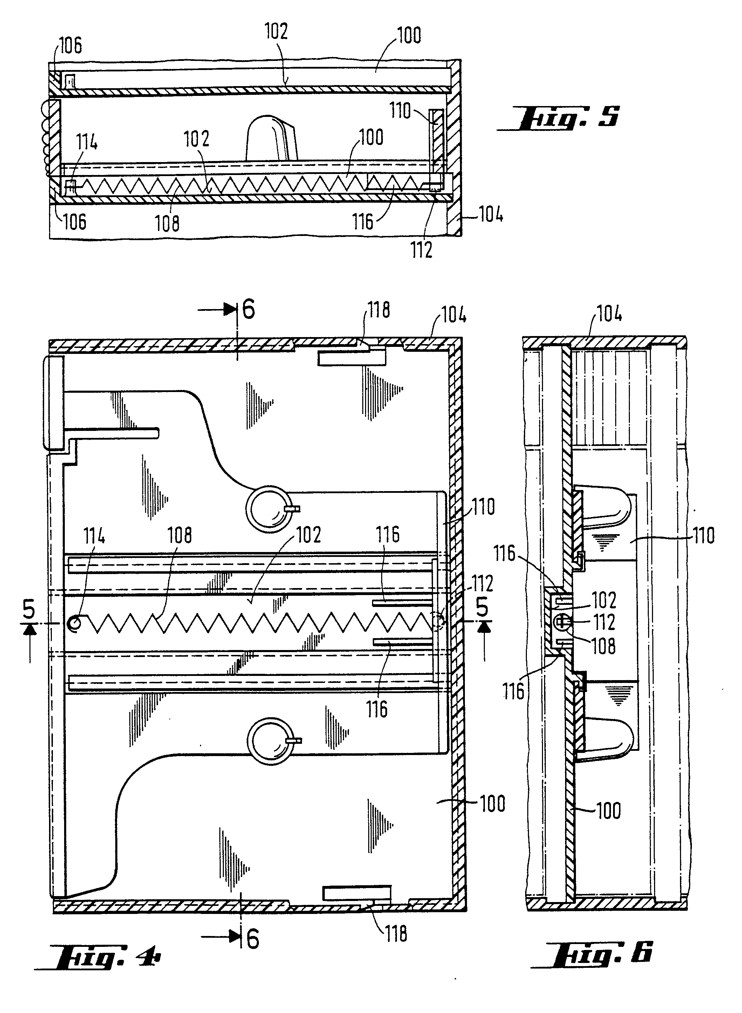

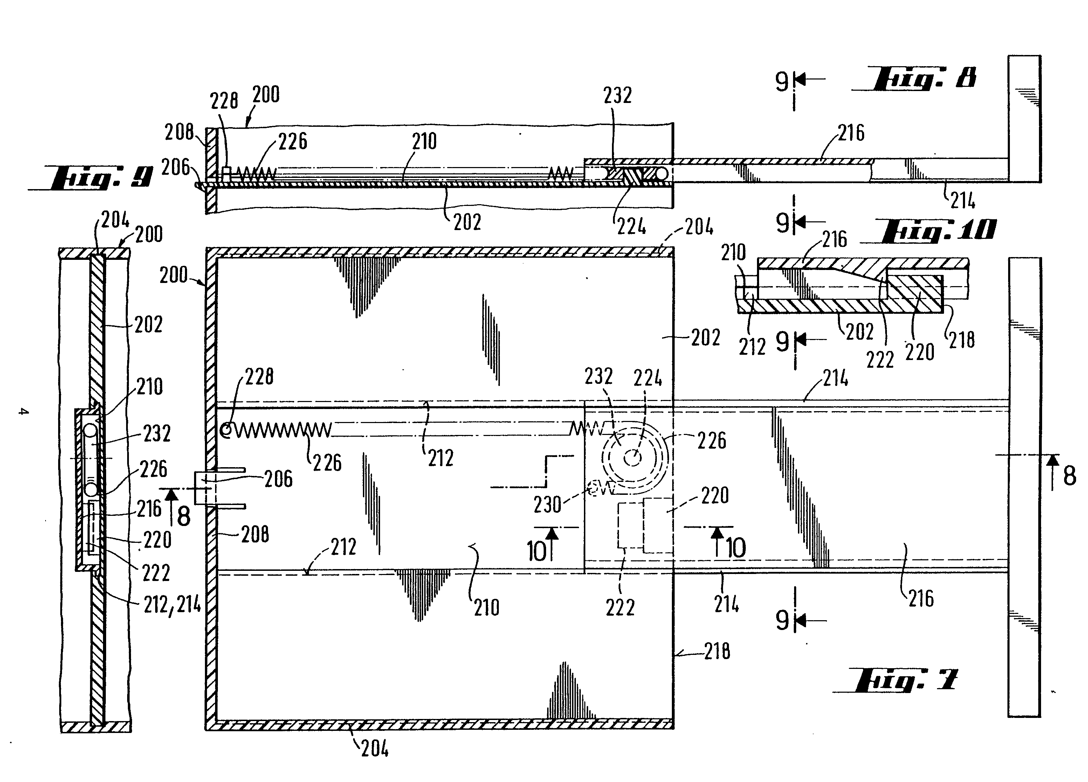

In der Ausführungsform nach Fig. 1-3 ist die vormontierte Baugruppe um die Länge der komprimierten Feder 38 tiefer als der Tiefe des Schiebers entspricht, und dasselbe gilt natürlich auch für das Restgehäuse. Wenn diesbezüglich beengte Raumverhältnisse vorliegen, etwa beim Einbau in Nischen einer Kraftfahrzeuginneneinrichtung, kann die Ausführungsform nach Fig. 4-6 bevorzugt sein.

Bei dieser Ausführungsform weist die Platte 100 einen eingetieften Kanal 102 auf, der etwa in der Symmetrieebene des Gehäuses 104 liegt. Wie man in Fig. 5 erkennt, wird der Kanal frontseitig durch eine an die Platte 100 angeformte, hochstehende Leiste 106 verdeckt ; um deren Höhe geht also Speicherraum gegenüber der Ausführungsform nach Fig. 1-3 verloren. Dafür kann aber die Gehäusetiefe fast vollständig für den Schieber ausgenutzt werden, da hier als Ausschubfederanordnung eine Schraubenzugfeder vorgesehen ist. Diese Feder 108 ist mit ihrem gehäuseinneren Ende an einem von der Schieberrückwand 110 abwärts ragenden Zapfen 112 eingehangen, mit ihrem frontseitigen Ende an einem Zapfen 114, der hinter der Leiste 106 vom Grund des Kanals 102 hochsteht. Beidseits der Feder erstrecken sich noch innerhalb des Kanals 102 Anschlagstücke 116 von der Schieberrückwand nach vorn, die die äußere Endstellung des Schiebers durch Auflaufen auf die Leiste 106 begrenzen. Die Montage im Restgehäuse 104 ist analog der nach Fig. 1-3 mit dem Unterschied, daß die Verankerungshaken 118 der Platte 100 nicht in Durchbrüche der Gehäuserückwand, sondern solche der Gehäuseseitenwände eingreifen. - Bezüglich der Verriegelungsanordnung ist auf das oben zu Fig. 1-3 Gesagte zu verweisen.

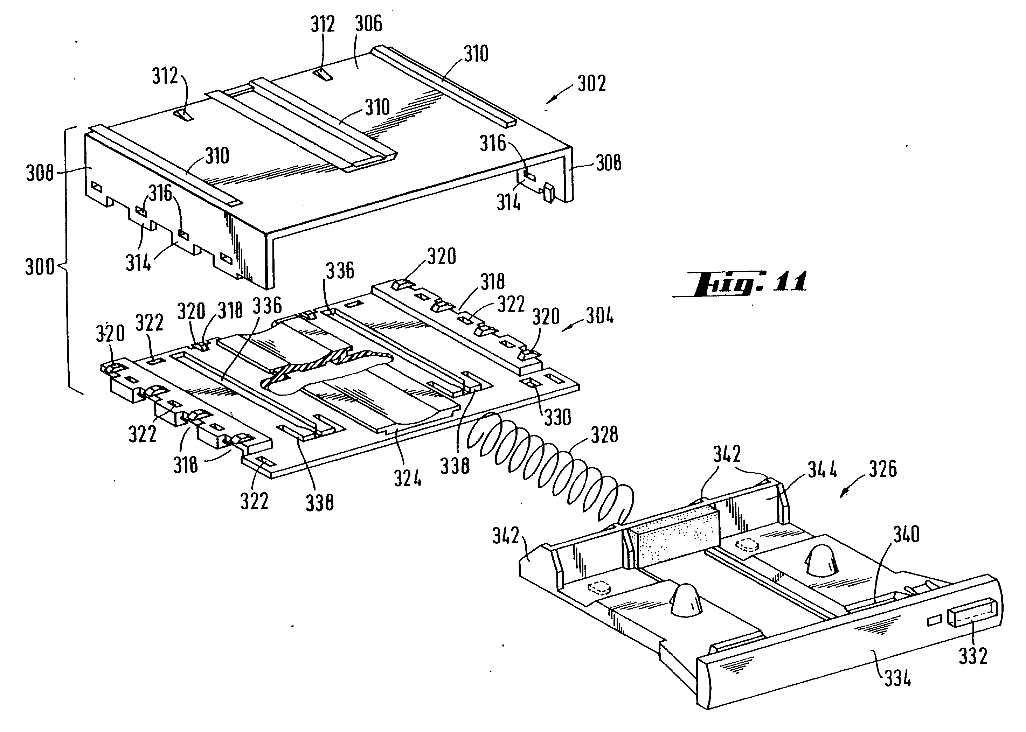

Die Ausführungsform nach Fig. 7 bis 10 ist für eine Vorrichtung zum Aufbewahren von Compactdisks bestimmt, könnte aber in ähnlicher Form auch für Kompaktkassetten abgewandelt werden, wenn diese beispielsweise nicht in Querrichtung (wie in Fig. 1-6), sondern in Längsrichtung im Schieber liegen. Neben den zeichnerisch dargestellten Elementen umfaßt die Vorrichtung nach Fig. 7-10 noch Halter für je eine Compactdisk, von denen mindestens einer von dem Schieber aus dem Gehäuse heraustransportiert wird ; diesbezügliche Einzelheiten bilden keinen Teil der vorliegenden Erfindung, und es genügt, auf die ältere Anmeldung EP-A-83108472.8 hinzuweisen.

Das Restgehäuse 200 weist seitliche Nuten auf, in die die Platte 202 mit ihren Kanten 204 einschiebbar ist. Ein angeformter Haken 206 an der gehäuseinneren Endkante der Platte wird beim Einschub durch Auftreffen auf die Kante einer entsprechenden Gehäuseöffnung elastisch ausgelenkt und verhakt sich dann hinter der Gehäuserückwand 208.

In ihrer Symmetrieebene weist die Platte 202 eine Eintiefung 210 auf, die sich über die gesamte Einschiebetiefe der Platte erstreckt und die zu den Gehäusenuten parallele Führungsnuten 212 für abgewinkelte Führungsstege 214 des Schiebers 216 aufweist. Nahe der frontseitigen Endkante 218 der Platte ragen von dem Grunde der Eintiefung 210 ein Anschlagblock 220 für eine Anschlagnase 222 des Schiebers sowie ein Poller 224 nach oben, um den eine Zugschraubenfeder 226 gelegt ist. Ein Ende der Feder 226 ist an einem Zapfen 228 eingehangen, der seitlich neben dem Verriegelungshaken in der Eintiefung 210 vorgesehen ist, und das andere Federende ist an einem Haken 230 befestigt, der nahe dem hinteren Schieberende in die Eintiefung 210 nach unten ragt. Zur Verringerung der Reibung ist auf den Poller 224 noch ein drehbar montiertes Röllchen 232 gesetzt, in dessen Umfangsnut die Feder geführt ist.

Während bei der Bauart nach Fig. 4-6 die automatische Montage etwas kompliziert wird, weil zunächst die Feder 108 an der Platte einzuhängen ist, dann der Schieber einzufädeln ist und schließlich das andere Federende an dem dann relativ schlecht zugänglichen schieberseitigen Zapfen eingehangen werden kann, ist die zuletzt beschriebene Anordnung der Feder günstiger, da sie vor dem Einfädeln des Schiebers in die Führungsnuten bereits mit beiden Enden an den Zapfen verankert werden kann und sich dann « von selbst » um das Röllchen 232 schlingt.

Die Ausführungsform nach Fig. 11 ist für Kompaktkassetten bestimmt. Das Gehäuse 300 besteht aus einem Wandungsbauteil 302 und einer Platte 304. Das Wandungsbauteil 302 umfaßt die Deckwand 306, Seitenwandungen 308 sowie eine (in der Zeichnung nicht erkennbare) Rückwand. Auf der Deckwand 306 sind Stapeleinrichtungen in Form von Stegen 310 und Nocken 312 vorgesehen, auf die ein gleich ausgebildetes zweites Gehäuse aufschiebbar ist. Die freien Kanten der Seitenwandungen wie auch der Rückwand weisen Vorsprünge 314 auf, jeweils mit einem Durchbruch 316 versehen.

Die Platte 304 ist an drei Seiten ihres Umfangs zu den erwähnten Vorsprüngen und Durchbrüchen komplementär gestaltet, derart, daß die Vorsprünge 314 in Einschnitte 318 passen und Nasen 320 der Platte in die Durchbrüche 316 einschnappen können. Die beiden Teile 302, 304 können demgemäß zusammengeschnappt werden, doch sind natürlich auch andere Verbindungsmöglichkeiten vorstellbar, etwa Ultraschallverscheißung. Zur besseren Zentrierung sind ferner in der Platte noch Einsenkungen oder Durchbrüche 322 vorgesehen, in die entsprechende komplementäre Fortsätze der Seitenwandungen und der Rückwand des Wandungsbauteils passen.

Man erkennt ferner die an die Platte 304 angeformte Führungsschiene 324 für den Schieber 326, welche Schiene mittig ausgerundet ist, um die Schraubendruckfeder 328 gegen Ausknicken abzustützen. In der Falle 330 der Platte arretiert sich der Schieber beim Einschub, und diese Verriegelung wird durch Druck auf die Taste 332 in der Schieberfrontwand 334 gelöst. An den Schieberboden sind unten Fortsätze angeformt, die in Schlitze 336 der Platte 304 greifen. Das Ende der Schlitze nahe der Gehäuseöffnung verjüngt sich nach innen, und dieser Bereich ist durch einen ihn umgebenden Ausschnitt 338 freigemacht, damit die Schieberfortsätze beim Ausstoßen des Schiebers aus dem Gehäuse mittels der Feder 328 weich abgefangen werden, indem der Schlitz auswärts federt. Auch dies ist nur möglich, wenn die Platte getrennt gefertigt wird. Am Schieber erkennt man noch eine Einsenkung 340, in die die bei Kompaktkassetten übliche Kopfspiegelverdickung paßt, sowie Versteifungsrippen 342 für die Schieberrückwand 344, an der die Feder 328 angreift.

Es versteht sich, daß ein Teil der Gehäuseseitenwandungen bzw. der Rückwand auch an die Platte 304 anstatt an das Bauteil 302 angeformt werden kann, vorausgesetzt, daß die eingangs geschilderten Voraussetzungen für das Entformen beim Spritzguß erhalten bleiben.

**Patentansprüche**

1. Vorrichtung zum Aufbewahren von flachen Aufzeichnungsträgern, wie Kompaktkassetten und Compactdisks, mit einem Gehäuse, mindestens einem Schieber, der zwischen einer ersten Position im Gehäuse und einer zweiten ausgefahrenen Position, in der ein Aufzeichnungsträger dem Schieber bequem entnehmbar ist, beweglich ist, einer Federanordnung, die den Schieber in die zweite Position vorspannt, einer Verriegelungsanordnung, die den Schieber gegen die Federvorspannung im Gehäuse hält und manuell entriegelbar ist, sowie in dem Gehäuse vorgesehenen Führungsschienen für den Schieber, dadurch gekennzeichnet, daß für jeden Schieber eine getrennt gefertigte, die Schieberführung und Mittel zum Halten eines Federendes in seiner Funktionslage aufweisende Platte zusammen mit der Federanordnung als vormontierte Baugruppe in das Gehäuse eingefügt ist.

2. Vorrichtung nach Anspruch 1, dadurch gekennzeichnet, daß die vormontierte Baugruppe auch den Schieber selbst umfaßt.

3. Vorrichtung nach Anspruch 2, bei der die beiden Schieberpositionen durch Anschläge am Schieber und am Gehäuse definiert sind, dadurch gekennzeichnet, daß die gehäuseseitigen Anschläge an der vormontierten Baugruppe vorgesehen sind.

4. Vorrichtung nach Anspruch 1, dadurch gekennzeichnet, daß zumindest Teile der Verriegelungsanordnung ebenfalls an der vormontierten Baugruppe vorgesehen sind.

5. Vorrichtung nach Anspruch 1, dadurch gekennzeichnet, daß das Gehäuse und die Platte(n) aus unterschiedlichem Material bestehen.

6. Vorrichtung nach Anspruch 3, bei der die äußere Schieberposition durch das Ende von gehäuseseitigen Schlitzen definiert ist, dadurch gekennzeichnet, daß die in der Platte vorgesehenen Schlitze federnde Enden aufweisen.

7. Vorrichtung nach Anspruch 1, bei der mehreren Schiebern ein gemeinsames Gehäuse zugeordnet ist, dadurch gekennzeichnet, daß jede Platte zugleich eine Trennwand zwischen benachbarten Schieberaufnahmefächern des Gehäuses bildet.

8. Vorrichtung nach Anspruch 1, bei der die Federanordnung eine Zylinderschrauben-Druckfeder umfaßt und am Gehäuse die Druckfeder gegen Ausknicken abstützende Fortsätze vorgesehen sind, dadurch gekennzeichnet, daß zumindest Teile der Fortsätze an der einfügbaren Platte vorgesehen sind.

9. Vorrichtung nach Anspruch 1, dadurch gekennzeichnet, daß die Federanordnung eine zwischen einer Bodenplatte des Schiebers und der einfügbaren Platte angeordnete Schraubenzugfeder umfaßt.

10. Vorrichtung nach Anspruch 9, dadurch gekennzeichnet, daß die Platte einen sich in Schieberbewegungsrichtung erstreckenden Kanal aufweist, in welchem sich die Zugfeder von einem Einhängepunkt nahe einer Schieberrückwand zu einem Einhängepunkt an der einfügbaren Platte erstreckt, der von einer an die Platte angeformten hochstehenden Leiste frontseitig verdeckt wird.

11. Vorrichtung nach Anspruch 9, dadurch gekennzeichnet, daß der Schieber einen sich in seiner Bewegungsrichtung erstreckenden Kanal aufweist, in welchem sich die Zugfeder von einem Einhängepunkt nahe einer Schieberrückwand in Richtung auf die Schieberfrontseite erstreckt, dort um einen an der einfügbaren Platte ausgebildeten Poller herumgelegt und in Richtung auf die Schieberrückwand zurückgeführt ist bis zu einem plattenseitigen Einhängepunkt nahe dem gehäuseinneren Ende des Schiebers in dessen erster Position.

12. Vorrichtung nach Anspruch 1, dadurch gekennzeichnet, daß das Gehäuse Positioniermittel zum Einfügen der Platte aufweist, und daß an der Platte einerseits, am Gehäuse andererseits Verankerungselemente zum formschlüssigen Sichern der Platte im Gehäuse ausgebildet sind.

**Claims**

1. Device for storing flat recording media, such as compact cassettes and compact discs, having a housing, at least one slider member which can be moved between a first position in the housing and a second ejected position in which a recording medium can easily be removed from the slider member, a spring arrangement which biases the slider member towards the second position, a locking arrangement which holds the slider member in the housing against the bias of the spring and can be unlocked manually, and guide rails provided in the housing for the slider member, characterised in that for each slider member a separately manufactured plate having the slider member guide means and having means for holding one end of the spring in its operating position is inserted into the housing together with the spring arrangement as a preassembled assembly.

2. Device according to claim 1, characterised in that the preassembled assembly also includes the slider member itself.

3. Device according to claim 2 wherein the two slider member positions are defined by stops on the slider member and on the housing, characterised in that the housing-side stops are provided on the preassembled assembly.

4. Device according to claim 1, characterised in that part at least of the locking arrangement is likewise provided on the preassembled assembly.

5. Device according to claim 1, characterised in that the housing and the plate(s) consist of different materials.

6. Device according to claim 3 wherein the outer slider member position is defined by the end of slots in the housing, characterised in that the slots provided in the plate have resilient ends.

7. Device according to claim 1 wherein several slider members are assigned a common housing, characterised in that each plate at the same time forms a separating wall between adjacent slider member-receiving compartments of the housing.

8. Device according to claim 1 wherein the spring arrangement comprises a cylindrical helical compression spring, and extension pieces are provided on the housing which support the compression spring against bending outwards, characterised in that at least some of the extension pieces are provided on the insertable plate.

9. Device according to claim 1, characterised in that the spring arrangement comprises a helical tension spring arranged between a base plate of the slider member and the insertable plate.

10. Device according to claim 9, characterised in that the plate has a channel which extends in the direction of movement of the slider member and in which the tension spring extends from an attachment point close to a rear wall of the slider member to an attachment point on the insertable plate, the channel being covered at the front by an upright bar formed integrally with the plate.

11. Device according to claim 9, characterised in that the slider member has a channel which extends in the direction of movement of the slider member and in which the tension spring extends from an attachment point close to a rear wall of the slider member in the direction towards the front of the slider member, is there passed around a post constructed on the insertable plate and is guided back in the direction towards the rear wall of the slider member as far as an attachment point on the plate close to the inner end of the slider member in the housing when the slider member is in its first position.

12. Device according to claim 1, characterised in that the housing has positioning means for inserting the plate, and that on the plate on the one hand and on the housing on the other hand there are constructed anchoring elements for securing the plate in the housing in positively-locking manner.

**Revendications**

1. Dispositif pour le stockage de supports d'enregistrement plats, tels que des cassettes compactes et des disques compacts, comportant un coffret possédant au moins un tiroir déplaçable entre une première position dans le coffret et une seconde position ressortie, dans laquelle un support d'enregistrement peut être retiré aisément du tiroir, un dispositif à ressort qui précontraint le tiroir dans la seconde position, un dispositif de verrouillage qui maintient le tiroir dans le coffret à l'encontre de la précontrainte exercée par le ressort et peut être déverrouillé manuellement, ainsi que des rails de guidage prévus dans le coffret, pour le tiroir, caractérisé en ce que pour chaque tiroir, une plaque fabriquée séparément et comportant le guide pour le tiroir et des moyens pour maintenir une extrémité du ressort dans sa position de fonctionnement, est insérée, conjointement avec le dispositif à ressort, sous la forme d'un module préalablement assemblé, dans le coffret.

2. Dispositif selon la revendication 1, caractérisé en ce que le module préalablement assemblé englobe également le tiroir lui-même.

3. Dispositif selon la revendication 2, dans lequel les deux positions du tiroir sont définies par des butées présentes dans le tiroir et dans le coffret, caractérisé en ce que les butées situées dans le coffret sont prévues sur le module préalablement assemblé.

4. Dispositif selon la revendication 1, caractérisé en ce qu'au moins des parties du dispositif de verrouillage sont également prévues sur le module préalablement assemblé.

5. Dispositif selon la revendication 1, caractérisé en ce que le coffret et la ou les plaques sont réalisés en des matériaux différents.

6. Dispositif selon la revendication 3, dans lequel la position extérieure du tiroir est définie par l'extrémité de fentes ménagées dans le coffret, caractérisé en ce que les fentes prévues dans la plaque possèdent des extrémités élastiques.

7. Dispositif selon la revendication 1, dans lequel un coffret commun est associé à plusieurs tiroirs, caractérisé en ce que chaque plaque forme simultanément une paroi de séparation entre des compartiments voisins, servant à recevoir le tiroir, du coffret.

8. Dispositif selon la revendication 1, dans lequel le dispositif à ressort contient un ressort hélicoïdal cylindrique de pression et qu'il est prévu, sur le coffret, des prolongements soutenant le ressort de pression en le protégeant contre un flambage, caractérisé en ce qu'au moins des parties des prolongements sont prévues sur la plaque pouvant être insérée.

9. Dispositif selon la revendication 1, caractérisé en ce que le dispositif à ressort comporte un ressort hélicoïdal de traction disposé entre la plaque de fond du tiroir et la plaque pouvant être insérée.

10. Dispositif selon la revendication 9, caractérisé en ce que la plaque possède un canal s'étendant dans la direction de déplacement du tiroir et dans lequel le ressort de traction s'étend depuis un point d'accrochage situé à proximité d'une paroi arrière du tiroir jusqu'à un point d'accrochage situé sur la plaque pouvant être insérée, et qui est masqué frontalement par une barrette faisant saillie vers le haut et formée par façonnage sur la plaque.

11. Dispositif selon la revendication 9, caractérisé en ce que le tiroir possède un canal, qui s'étend dans sa direction de déplacement et dans lequel le ressort de traction s'étend depuis un point d'accrochage situé à proximité d'une paroi arrière du tiroir, en direction de la face avant de ce dernier, entoure en cet endroit un téton formé sur la plaque pouvant être insérée et est rabattu en direction de la paroi arrière du tiroir jusqu'à un point d'accrochage situé sur le côté de la plaque à proximité de l'extrémité du tiroir située à l'intérieur du coffret, lorsque le tiroir est dans sa première position.

12. Dispositif selon la revendication 1, caractérisé en ce que le coffret comporte des moyens de positionnement pour l'insertion de la plaque et en ce que des organes d'ancrage permettant de bloquer, selon une liaison par formes complémentaires, la plaque dans le coffret sont prévus sur la plaque d'une part et dans le coffret d'autre part.

Fig. 1

**Fig. 2**

**Fig. 3**

Fig. 5

Fig. 4

Fig. 6

Fig. 8

Fig. 9

Fig. 10

Fig. 7

EP 0 190 180 B1

Fig. 11